# EUROPEAN PATENT APPLICATION

(11) **EP 2 482 368 A1**
(43) Date of publication of application: **01.08.2012**
(21) Application number: 12153020.8
(22) Date of filing: 30.01.2012
(51) Int. Cl.: H01M 2/34, H01M 4/13, H01M 4/139, H01M 4/70, H01M 10/04, H01M 10/0585, H01M 10/42, H01M 2/16, H01M 2/18, H01M 4/66, H01M 6/50, H01M 10/02, H01M 10/0525

(54) **Stack type battery and method of manufacturing the same**

(30) Priority: 31.01.2011 JP 2011019016; 31.05.2011 JP 2011121342
(71) Applicant: Sanyo Electric Co., Ltd., Osaka 570-8677 (JP)
(72) Inventor: Maeda, Hitoshi, Moriguchi-shi, Osaka 5708677 (JP); Shinyashiki, Yoshitaka, Moriguchi-shi, Osaka 5708677 (JP); Donoue, Kazunori, Moriguchi-shi, Osaka 5708677 (JP); Fujiwara, Masayuki, Moriguchi-shi, Osaka 5708677 (JP)
(74) Representative: Glawe, Delfs, Moll

(57) **Abstract**

A stack type battery has a positive electrode plate (1) (a first electrode) having a positive electrode active material layer (1a) (active material mixture layer) formed on at least one side of a current collector made of a metal plate and a positive electrode current collector lead (11) (a portion in which the metal is exposed) provided in a portion thereof, the positive electrode plate (1) and the positive electrode current collector lead (11) facing a negative electrode plate (a second electrode) across a separator (3a). A protective layer (13) made of a material having a lower electron conductivity than the metal of the current collector and being non-insulative is formed at a portion of the positive electrode plate (1) between the positive electrode current collector (11) and the separator (3a). The positive electrode current collector lead (11) and the separator (3a) are jointed to each other by the protective layer (13).

## Description

### BACKGROUND OF THE INVENTION

### Field of the Invention

The present invention relates to a stack type battery and a method of manufacturing the battery. More particularly, the invention relates to a stack type battery employing a stacked electrode assembly in which square-shaped positive and negative electrode plates and separators are stacked, and a method of manufacturing the battery.

### Description of Related Art

In recent years, batteries have been used for not only the power source of mobile information terminal devices such as mobile-phones, notebook computers, and PDAs but also for such applications as robots, electric vehicles, and backup power sources. This has led to a demand for higher capacity batteries. Especially in the field of secondary batteries, non-aqueous secondary batteries such as lithium-ion batteries are widely utilized as the power sources for such applications as described above, because of their high energy density and high capacity.

The battery configurations of the lithium-ion batteries are broadly grouped into two types: one is a spirally-wound type lithium-ion battery, in which a spirally wound electrode assembly is enclosed in a battery case, and the other is a stack type lithium-ion battery (stack-type prismatic lithium ion battery), in which a stacked electrode assembly comprising a plurality of stacks of rectangular-shaped electrodes is enclosed in a battery can or a laminate battery case prepared by welding laminate films together.

Of the above-described lithium ion secondary batteries, the stack type lithium-ion battery has a stacked electrode assembly having the following structure. The stacked electrode assembly has a required number of sheet-shaped positive electrode plates each having a positive electrode current collector lead protruding therefrom and a required number of sheet-shaped negative electrode plates each having a negative electrode current collector lead protruding therefrom. The positive electrode plates and the negative electrode plates are stacked with separators, made of polyethylene, polypropylene, or the like and interposed between the positive and negative electrode plates.

Conventionally, the just-described stack type battery is constructed in the following manner. Two sheets of separator are bonded at their peripheral portions to form a pouch, and in this pouch-shaped separator, either one of the positive electrode plate and the negative electrode plate is enclosed. Then, the pouch-shaped separator enclosing the positive electrode plate or the negative electrode plate is alternately stacked on a negative electrode plate or a positive electrode plate that is not enclosed in a pouch-shaped separator, to construct a stacked electrode assembly. In this construction, one of the positive electrode plate and negative electrode plate is enclosed and held in the pouch-shaped separator, so the positive electrode plate and the negative electrode plate are prevented effectively from making contact with each other and causing short circuiting.

In the non-aqueous secondary battery such as the lithium-ion battery, the negative electrode mixture-coated portion of the negative electrode plate needs to be formed with a greater area than the positive electrode mixture-coated portion of the positive electrode plate so that the negative electrode active material can reliably and smoothly absorb the lithium ions released from the positive electrode active material during charge. For this reason, the positive electrode lead portion, where the metal sheet made of an aluminum foil or the like that is not coated with the positive electrode mixture and exposed, serving as the current collector, protrudes at the edge portion of the positive electrode plate to form the positive electrode current collector lead, usually has such a structure that the exposed portion of the metal sheet faces the negative electrode mixture-coated portion of the negative electrode plate across the separator.

In the case of such a structure that the exposed portion of the metal current collector of one of the electrodes faces the other electrode across the separator, the exposed portion of the metal current collector of one of the electrodes, or the other electrode, may penetrate the separator due to some kind of shock such as an impact caused by dropping of the battery or vibrations, causing the two electrodes to come in contact with each other and resulting in short circuiting. This causes a large current to flow therethrough, and there is a risk of violent heat generation, for example. In particular, even when the above-mentioned pouch-shaped separator is used, the separator cannot be welded at the positive electrode lead portion, where the positive electrode lead protrudes at that location. Consequently, at the positive electrode lead portion, the separator is likely to be displaced from the original position, so the risk of short circuiting is correspondingly higher. This tendency is more conspicuous in the applications that require high current, in which the lead portion is formed wider.

In addition, when cutting out the negative electrode plate and the positive electrode plate in the manufacturing process of the electrode assembly, burrs may be formed at the edges of the plates that have been cut. Such burrs can penetrate through the separator and cause short circuiting between the negative electrode plate and the positive electrode plate.

Moreover, in the stack type battery, a plurality of positive electrode leads protruding from the stacked electrode assembly are bundled and joined to the positive electrode current collector terminal to perform current collection. Accordingly, a gap forms between the positive electrode lead portion and the separator, so the base end portion (base portion) of the positive electrode lead and the unwelded portion of the separator are easily displaced or curled. Furthermore, in this case, the greater the number of the stacks of the positive electrode leads, the more easily the separator is curled.

In view of the problems, as disclosed in Japanese Published Unexamined Patent Application No. 2001-93583 (Patent Document 1), it has been proposed to form a short circuiting prevention layer made of an insulative resin at the base end portion (base portion) of the lead portion to prevent short circuiting at the lead portion.

Japanese Published Unexamined Patent Application No. 2002-324571 (Patent Document 2) discloses that the separator is sealed with an adhesive agent at the lead portion of the electrode plate to thereby prevent the short circuiting resulting from the entry of foreign matters.

Japanese Published Unexamined Patent Application No. 2006-236994 (Patent Document 3) discloses that an insulating layer made of an adhesive agent, a double-sided adhesive tape, or the like is formed on the active material-uncoated current collector surface at the outer peripheral portion of the electrode plate to thereby prevent the short circuiting resulting from sideward displacement of the electrode plates.

Each of the structures disclosed in Patent Documents 1 to 3 appears to have a certain effect of preventing short circuiting at the lead portion because all of them have an insulating layer formed between the lead portion and the separator. However, with these structures, charging and discharging are possible even when, for example, burrs are formed and they penetrate through the separator as described above, as long as short circuiting does not occur. Consequently, when the battery is used continuously in this state for a long period of time, meltdown of the separator starts from the damaged portion, causing serious short circuiting, and the battery causes abnormal heat generation. In other words, although short circuiting may be prevented temporarily by the insulating layer, more serious short circuiting occurs nonetheless when, for example, the separator meltdown proceeds, and abnormal heat generation.

### CITATION LIST

[Patent Document 1] Japanese Published Unexamined Patent Application No. 2001-093583
[Patent Document 2] Japanese Published Unexamined Patent Application No. 2002-324571
[Patent Document 3] Japanese Published Unexamined Patent Application No. 2006-236994

In view of the problems, the inventors have proposed to form a protective layer using a material having a lower electron conductivity than the current collector and being non-insulative in place of the above-described insulating layer. When the burrs or the like penetrate through the separator as described above but do not cause short circuiting, this structure can cause rather gentler discharging than in the case where the insulation is maintained. This enables the device using the battery to detect abnormality of the battery by the battery voltage drop while avoiding abnormal heat generation. In addition, since the battery is gradually discharged in this way and finally completely discharged, large current does not flow even if short circuiting later occurs directly between the positive electrode plate and negative electrode plate. Therefore, battery safety can be ensured effectively. The inventors have made a patent application for this structure (Japanese Published Unexamined Patent Application No. 2007-095656: hereafter also referred to as "the earlier application").

It is an object of the present invention to improve the structure in the earlier application and provide a stack type battery that can ensure battery safety more effectively.

In addition, it is an object of the present invention to provide a method of manufacturing the stack type battery that makes it possible to ensure battery safety effectively and to manufacture the battery easily.

### BRIEF SUMMARY OF THE INVENTION

In order to accomplish the foregoing and other objects, the present invention provides a stack type battery, comprising:
one or more first electrodes each having a current collector made of a metal sheet, an active material mixture layer formed on at least one side thereof, and a portion in which the metal is exposed, each of the one or more first electrodes with the portion in which the metal is exposed facing one or more second electrodes across a separator; and
a protective layer formed between the separator and the portion of the first electrode in which the metal is exposed, the protective layer made of a material having a lower electron conductivity than that of the metal and being non-insulative,
wherein the separator and the portion of the first electrode in which the metal is exposed are joined by the protective layer.

In order to accomplish the foregoing and other objects, the present invention also provides a method of manufacturing a stack type battery comprising one or more first electrodes each having a current collector made of a metal sheet, an active material mixture layer formed on at least one side thereof, and a portion in which the metal is exposed, each of the one or more first electrodes with the portion in which the metal is exposed facing one or more second electrodes across a separator, the method comprising the steps of:
forming a protective layer made of a material having a lower electron conductivity than the metal and being non-insulative on at least one of the separator and the portion of the first electrode in which the metal is exposed; and
joining the portion in which the metal is exposed and the separator to each other by the protective layer.

The present invention makes it possible to ensure battery safety of a stack type battery effectively. The invention also makes it possible to manufacture the battery easily.

### BRIEF DESCRIPTION OF THE DRAWINGS

Fig. 1 shows portions of a stack type battery according to the present invention, wherein Fig. 1 (a) is a plan view illustrating a positive electrode plate thereof, Fig. 1(b) is a plan view illustrating a separator thereof, and Fig. 1(c) is a plan view illustrating a pouch-shaped separator thereof in which a positive electrode plate is disposed;
Fig. 2 is a plan view illustrating a negative electrode plate used for the stack type battery of the present invention;
Fig. 3 is a plan view illustrating a pouch-shaped separator in which a positive electrode plate is disposed, used for the stack type battery according to the present invention;
Fig. 4 is an exploded perspective view illustrating a stacked electrode assembly used for the stack type battery according to the present invention;
Fig. 5 is a plan view illustrating the stacked electrode assembly used for the stack type battery according to the present invention;
Fig. 6 is a plan view illustrating how positive and negative electrode current collector leads and positive and negative electrode current collector terminals are welded together;
Fig. 7 is a perspective view illustrating a laminate battery case in which the stacked electrode assembly is enclosed;
Fig. 8 is a partial plan view illustrating an example of a metal plate before an electrode plate is cut out in a manufacturing process of the electrode plate;
Fig. 9 is a partial plan view illustrating another example of a metal plate before an electrode plate is cut out in a manufacturing process of the electrode plate;
Fig. 10 is a plan view illustrating a modified example of a pouch-shaped separator in which a positive electrode plate is disposed, used for the stack type battery according to the present invention; and
Fig. 11 is a cross-sectional view taken along line Z-Z in Fig. 10.

### DETAILED DESCRIPTION OF THE INVENTION

A stack type battery of the present invention comprises: one or more first electrodes each having a current collector made of a metal sheet, an active material mixture layer formed on at least one side thereof, and a portion in which the metal is exposed, each of the one or more first electrodes with the portion in which the metal is exposed facing one or more second electrodes across a separator; and a protective layer formed between the separator and the portion of the first electrode in which the metal is exposed, the protective layer made of a material having a lower electron conductivity than that of the metal and being non-insulative, wherein the separator and the portion of the first electrode in which the metal is exposed are joined by the protective layer.

In the present invention, the term "the portion of the electrode in which metal is exposed" means to include the portion in which a current collector lead is formed (hereinafter also referred to as "current collector lead portion"), and needless to say, it also means to include any portion in which the metal is exposed that is formed in a location other than the current collector lead portion. The current collector lead portion may be one in which a current collector lead is integrally formed with the portion in which the metal is exposed, or one in which a current collector lead is formed by joining another metal member to the portion in which the metal is exposed.

In the above-described configuration of the present invention, the protective layer is formed between the separator and the portion in which the metal is exposed, as in the case of the previously-described earlier application. Therefore, when the burrs or the like penetrate through the separator but do not yet cause short circuiting, the protective layer serves to cause gentle discharging. This makes it possible to detect abnormality by the battery voltage drop. In addition, large current does not flow even if direct short circuiting later occurs. As a result, battery safety can be ensured effectively. Moreover, in the present invention, the separator and the portion of the first electrode in which the metal is exposed are joined by the protective layer. Conventionally, displacement or curling of the separator easily occurs at the location where the separator and the portion in which the metal is exposed face each other, so short circuiting easily occurs correspondingly. However, the present invention can prevent the displacement and curling by sealing this location by the protective layer. Thereby, battery safety can be ensured even more effectively. In other words, sealing with the protective layer prevents the displacement or curling that occurs between the separator and the portion in which the metal is exposed to make short circuiting unlikely. This makes the improvement in battery safety more reliable, along with the advantageous effect of gentle discharge through the protective layer as described above.

Moreover, by joining the separator and the portion of the first electrode in which the metal is exposed to each other by the protective layer, the first electrode can be positioned and fixed relative to the separator. At this time, it may appear possible to use an adhesive tape or the like for joining the portion in which the metal is exposed and the separator to each other, i.e., for positioning (fixing) the portion in which the metal is exposed and the separator. However, this increases the thickness and the parts count of the battery, and complicates the manufacturing process. In contrast, by allowing the protective layer to have the positioning (fixing) function, such problems can be avoided effectively.

It is desirable that the one or more first electrodes and the one or more second electrodes comprise a plurality of positive electrode plates having respective positive electrode current collector leads protruding therefrom and a plurality of negative electrode plates having respective negative electrode current collector leads protruding therefrom, and that the stack type battery further comprises a stacked electrode assembly having the positive electrode plates and the negative electrode plates being alternately stacked on one another across the separator interposed therebetween.

When using the stacked electrode assembly having the positive electrode plates and the negative electrode plates being alternately stacked on one another across the separator interposed therebetween, the displacement any curling of the separator tend to occur more easily at the location where the separator and the portion in which the metal is exposed face each other, so the advantageous effects of the present invention, in which the protective layer joins them at that location, are exhibited more noticeably.

It is desirable that the one or more first electrodes be positive electrode plates, and that the protective layer be formed additionally on the active material mixture layer near a boundary between the active material mixture layer of the positive electrode plate and the portion of the positive electrode plate in which the metal is exposed.

In the region near an end of the active material mixture layer of the positive electrode plate, that is, in the positive electrode active material layer that is near the boundary between the positive electrode active material layer the portion of the positive electrode plate in which the metal is exposed, the thickness of the positive electrode active material layer tends to be thicker than that in the other region. When the thickness of the positive electrode active material layer becomes thicker, the amount of the positive electrode active material per unit area accordingly becomes larger. As a consequence, metallic lithium tends to deposit easily on the negative electrode plate that faces the just-mentioned region. There is a. risk that the deposited metallic lithium may penetrate through the separator, causing short circuiting between the positive and negative electrodes.

When the protective layer is formed on the positive electrode active material layer that is near the boundary between the positive electrode active material layer and the portion in which the metal is exposed, the battery reaction can be inhibited in that region to present the deposition of the metallic lithium. This makes it possible to obtain a battery providing a higher level of safety.

In addition, when the portion in which the metal is exposed forms the current collector lead, electric current concentrates in the region of the positive electrode active material layer near the boundary between the positive electrode active material layer and the portion in which the metal is exposed, which forms the current collector, and the charge-discharge reaction proceeds more easily in that region than in the other region. Consequently, metallic lithium deposits on the negative electrode plate that faces the just-mentioned region in a greater amount. Therefore, it is more effective to provide the protective layer in the just-mentioned region.

It is desirable that the positive electrode active material layer and the separator be bonded to each other by the protective layer formed on the positive electrode active material layer.

This structure makes it possible to prevent the displacement and curing of the separator more effectively. In addition, this structure makes it possible to join the separator, i.e., to position (fix) the separator more reliably.

It is desirable that the thickness of the protective layer formed on the positive electrode active material be smaller than the thickness of the protective layer in the portion in which the metal is exposed.

When the thickness of the protective layer formed on the positive electrode active material is made smaller, the electrode assembly can be prevented from becoming thicker partially.

It is desirable that the separator be formed in a pouch shape, and each of the one or more first electrodes be enclosed in the pouch-shaped separator.

When the separators are overlapped with each other and joined to each other by welding, for example, to form a pouch-shaped separator and the first electrode is enclosed therein, the enclosed first electrode can be prevented from contacting with the second electrode effectively. In addition, the positioning and fixing can be done more easily because the first electrode can be positioned and fixed in a condition that the first electrode is inclosed and retained in the pouch-shaped separator. However, even in the case of this pouch-shaped separator, the separator cannot be joined at the current collector lead portion because the current collector lead protrudes therefrom. Consequently, the separator tends to be displaced or curled. In view of this problem, the separator and the current collector lead portion of he electrode are joined to each other by the protective layer so that the displacement and curling of the separator do not occur easily even at the current collector lead portion. In other words, although the pouch-shaped separator is a structure that is effective for preventing short circuiting, it has the problem of difficulty in preventing the displacement and curling of the separator at the current collector lead portion in the past. Therefore, with the pouch-shaped separator, the advantageous effects of the present invention, in which the portion in which the metal is exposed and the separator are joined to each other by the protective layer, can be exhibited evidently.

It is desirable that a positive electrode plate be enclosed in the pouch-shaped separator.

As described previously, it is necessary that the portion coated with the negative electrode mixture be formed in a greater area than the portion coated with the positive electrode mixture, so the negative electrode plate is usually prepared to have larger dimensions than the positive electrode plate. For this reason, it is more desirable to employ the structure in which the positive electrode plate is enclosed in the pouch-shaped separator from the viewpoint of space-saving.

It is desirable that the pouch-shaped separator comprise a separator folded and joined at a perimeter portion thereof intermittently, or separators overlapped and joined at a perimeter portion thereof intermittently.

When the separator comprise a separator folded and joined at a perimeter portion thereof intermittently, or separators overlapped and joined at a perimeter portion thereof intermittently, in other words, when the joining is done so as to leave unjoined portions in the perimeter portion, the electrolyte solution can easily infiltrate into the electrode inside the pouch-shaped separator through the unjoined portions. In this case, it is desirable that the proportion of the length of the region joined at the perimeter portion (i.e. the proportion of the joined region) with respect to the total length of the perimeter portion of the separator be from about 30% to about 70%. If the proportion of the joined region is less than 30%, the joining strength of the separator will be insufficient. On the other hand, if the proportion of the joined region exceeds 70%, the infiltration of the electrolyte solution will be insufficient.

It is desirable that the number of the positive electrode plates stacked in the stacked electrode assembly be 15 or greater.

When the number of the positive electrode plates in the stacked electrode assembly is 15 or greater, the displacement curling of the separator is particularly likely to occur, so the advantageous effects of the present invention, in which the portion in which the metal is exposed and the separator are joined to each other by the protective layer, are exhibited particularly evidently.

It is desirable that each of the one or more first electrodes have a current collector having a width of 30 mm or greater.

When the width of the current collector lead is 30 mm or greater, the displacement and curling of the separator is particularly likely to occur, so the advantageous effects of the present invention, in which the portion in which the metal is exposed and the separator are joined to each other by the protective layer, are exhibited particularly evidently.

It is desirable that the protective layer protrude from a position between the portion in which the metal is exposed and the separator to outside.

With the above-described structure, even when the second electrode (e.g., the negative electrode plate) is displaced and moved outside the separator, the protruding portion of the protective layer can prevent the portion of the first electrode (e.g., the positive electrode plate) in which the metal is exposed and the second electrode from making contact with each other directly. In this case, as in the above-described case where burrs or the like penetrate through the separator but do not yet cause short circuiting, gentle discharge is caused also in the protruding portion of the protective layer. As a result, abnormality can be detected by a battery voltage drop. At the same time, a large current flow is prevented when direct short circuiting occurs. As a result, battery safety can be ensured effectively. Moreover, when the protruding portion of the protective layer is formed, it becomes unnecessary to form the separator with extra dimensions in case that the second electrode (e.g., the negative electrode plate) is displaced.

It is desirable that the protruding portion of the protective layer protrude from the separator from about 2 mm to about 6 mm outside, although it may depend on the battery size, for example.

It is desirable that the protective layer comprise an insulative polymer substance and a powder dispersed in the insulative polymer substance, the powder comprising at least one material selected from the group consisting of an electron conductive carbonaceous material, a semiconductor material, and a conductive oxide.

In the just-described configuration, the protective layer contains the powder of an inorganic material, such as an electron conductive carbonaceous material, a semiconductor material, and a conductive oxide, dispersed in the insulative polymer substance. As a result, it is easy to form the protective layer from a material that has a lower electron conductivity than the metal of the current collector and is non-insuiative, that is, a semi-conductive material.

It is desirable that the insulative polymer substance be at least one substance selected from the group consisting of polyimide, polyamideimide, and polyvinylidene fluoride.

With this configuration, the protective layer made of a semi-conductive material can be formed particularly easily.

Further examples of the electrically-conductive material to be dispersed in the insulative polymer substance include the following:
Carbon-based material: graphite materials such as natural graphite and artificial graphite, coke, carbon fiber, mesophase carbon microbeads, and hardcarbons which are carbides of synthetic resins.
Semiconductor material: silicon, germanium, and gallium arsenide.
Conductive oxide: SnO₂, TiO₂, and ZnO.

It is desirable that the protective layer comprise: an insulative polymer substance; at least one material selected from the group consisting of an electron conductive carbonaceous material, a semiconductor material, and a conductive oxide, the material dispersed in the insulative polymer substance; and a filler.

In the above-described configuration, the protective layer contains an insulative polymer substance, at least one material selected from the group consisting of an electron conductive carbonaceous material, a semiconductor material, and a conductive oxide, which imparts electrical conductivity to the insulative polymer substance, and a filler. As a result, color differences are observed between the protective layer, the active material mixture layer, and the current collector after drying. This makes it possible to detect the boundary between the active material mixture layer and the current collector and the boundary between the protective layer the active material mixture clearly by an optical sensor. Therefore, when, for example, misalignment in the stacks and misalignment in electrode-winding occur in the electrode plates, such misalignment in the stacks and misalignment in electrode-winding can be detected automatically using an optical sensor and an image processing apparatus. As a result, the efficiency in the manufacture of the battery improves.

It is desirable that filler be at least one substance selected from the group consisting of polyimide powder and alumina powder.

The just-described configuration makes it possible to color the protective layer effectively. As a result, the boundary between the active material mixture layer and the current collector and the boundary between the protective layer and the active material mixture can be detected more dearly.

The invention also provides a method of manufacturing a. stack type battery comprising one or more first electrodes each having a current collector made of a metal sheet, an active material mixture layer formed on at least one side thereof, and a portion in which the metal is exposed, each of the one or more first electrodes with the portion in which the metal is exposed facing one or more second electrodes across a separator. The method comprises the steps of: forming a protective layer made of a material having a lower electron conductivity than the metal and being non-insulative on at least one of the separator and the portion of the first electrode in which the metal is exposed; and joining the portion in which the metal is exposed and the separator to each other by the protective layer.

In the just-described method, the protective layer is formed on at least one of the separator and the portion in which the metal is exposed. As a result, battery safety can be ensured more effectively by the protective layer. In addition, the portion in which the metal is exposed and the separator are joined to each other by the protective layer. As a result, the displacement and the curling of the separator can be prevented, and thereby, battery safety can be ensured even more effectively. Moreover, by joining the portion of the first electrode in which the metal is exposed and the separator to each other by the protective layer, the protective layer is allowed to have the positioning function, so a stack-type battery providing a high level of safety can be manufacture simply and easily.

It is desirable that the step of forming a protective layer comprise preparing a flurry by dispersing a powder in an insulative polymer substance, the powder comprising at least one material selected from the group consisting of an electron conductive carbonaceous material, a semiconductor material, and a conductive oxide, and coating the slurry onto at least one of the portion in which the metal is exposed and the separator to form the protective layer; and that the step of joining the portion in which the metal is exposed and the separator to other comprise bonding the portion in which the metal is exposed and the separator to each other before drying the slurry, and drying the slurry to thereby join the portion in which the metal is exposed and the separator to each other.

In the just-described method, the protective layer contains the powder of an inorganic material, such as an electron conductive carbonaceous material, a semiconductor material, and a conductive oxide, dispersed in the insulative polymer substance. As a result, it is easy to form the protective layer from a. material that has a lower electron conductivity than the metal of the current collector and is non-insulative, that is a semi-conductive material.

If an adhesive tape, for example, is used for the protective layer in this process, the thickness the parts count of the battery is increased and the manufacturing process is made somewhat complicated. However, the just-described method makes it possible to avoid such problems effectively. Specifically, while drying the slurry that formes the protective layer, the separator is bonded at the same time using the slurry not yet being dried as an adhesive layer. As a result, the battery thickness is kept small, and the need for an additional member for positioning (fixing) is eliminated, Furthermore, the drying step of the protective layer and the positioning step of the separator can be carried out simultaneously, so the manufacturing method is correspondingly made simpler and easier and the manufacturing steps can also be simplified.

It is desirable that the step of forming a protective layer comprise forming the protective layer so as to protrude from a position between the portion in which the metal is exposed and the separator to outside.

With the above-described structure, even when the second electrode (e.g., the negative electrode plate) is displaced and moved outside the separator, the protruding portion of the protective layer can prevent the portion of the first electrode (e.g., the positive electrode plate) in which the metal is exposed and the second electrode from making contact with each other directly. In this case, as in the above-described case where burrs or the like penetrate through the separator but do not yet cause short circuiting, gentle discharge is caused also in the protruding portion of the protective layer. As a result, abnormality can be detected by a battery voltage drop. At the same time, a large current flow is prevented when short circuiting occurs. As a result, battery safety can be ensured effectively.

It is desirable that the one or more first electrodes comprise positive electrode plates, and in the step of forming a protective layer, the protective layer be formed, in a location between the active material mixture layer and the separator near a boundary between the active material mixture layer of the positive electrode plate and the portion of the positive electrode plate in which the metal is exposed.

Thereby, battery safety can be ensured more effectively.

Hereinbelow, with reference to the drawings, the present invention is described in further detail based on certain embodiments examples thereof. It should be construed, however, that the present invention is not limited to the following embodiments and examples, and various changes and modifications are possible without departing from the scope of the invention.

### Preparation of Positive Electrode Plate

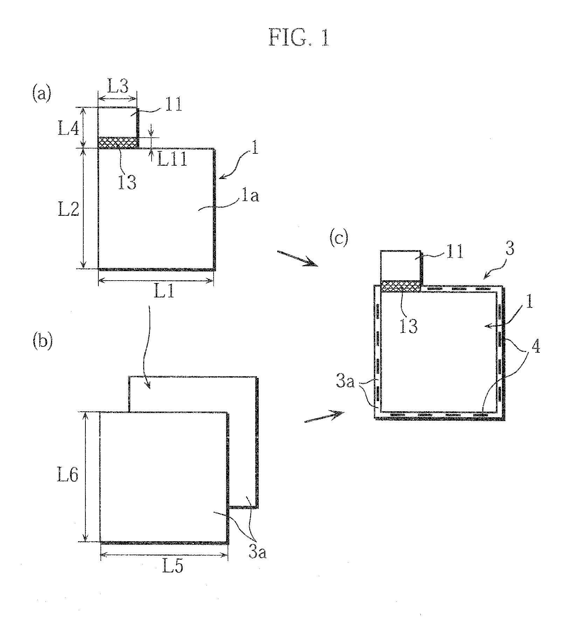

90 mass % of LiCoO₂ as a positive electrode active material, 5 mass % of carbon black as a conductive agent, and 5 mass % of polyvinylidene fluoride (PVdF) as a binder agent were mixed with an N-methyl-2-pyrrolidone (NMP) solution as a solvent, to prepare a positive electrode slurry. The resultant positive electrode scurry was applied onto both sides of an aluminum foil (thickness: 15 µm) serving as a positive electrode current collector. Thereafter, the resultant article was dried by heating to remove the solvent and compressed with rollers to a thickness of 0.1 mm. Subsequently, as illustrated in Fig. 1(a), it was cut into pieces each having a width L1 of 85 mm and a. height L2 of 85 mm, to prepare positive electrode plates 1 each having a positive electrode active material layer 1a. on each side of the aluminum foil. At this point, in each of the positive electrode plates 1, an aluminum foil on which the positive electrode active material layer 1a was not formed, which had a width L3= 30 mm and a height L4 = 20 mm, was allowed, to protrude outwardly from one end (the left end in Fig. 1(a)) of one side of the positive electrode plate 1 that extends along the width L1, to form a positive electrode current collector lead 11.

### Preparation of Negative Electrode Plate

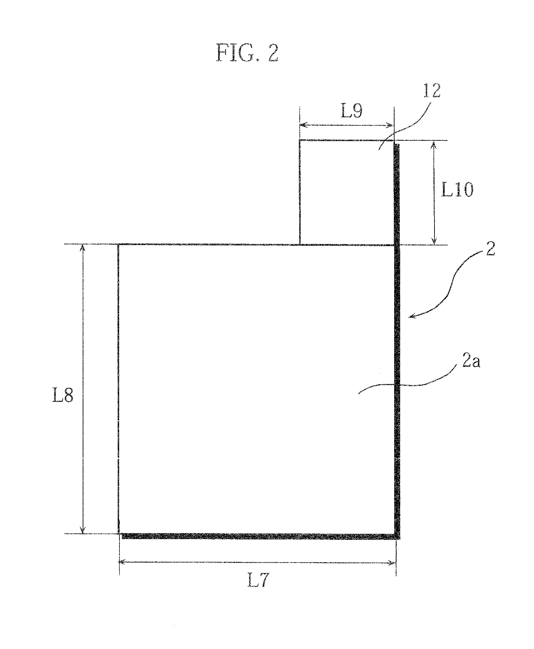

96 mass % of graphite powder as a negative electrode active material and 2 mass % of carboxymethylcellulose (CMC) and 2 mass % of styrene-butadiene rubber (SBR) as binder agents were mixed with pure water as a solvent, to form a negative electrode slurry. The resultant negative electrode slurry was applied onto both sides of a copper foil (thickness: 10 µm) serving as a negative electrode current collector. Thereafter, the resultant article was dried to remove the solvent and compressed with rollers to a thickness of 0.08 mm. Subsequently, as illustrated in Fig. 2, it was cut into pieces each having a width L7 of 90 mem and a height L8 of 90 mm, to prepare negative electrode plates 2 each having a negative electrode active material layer 2a on each side of the copper foil. At this point, in each of the negative electrode plates 2, a copper foil on which the negative electrode active material layer 2a was not formed, having a width L9 of 30 mm aid a height L10 of 20 mm, was allowed to protrude outwardly from one end (the right end in Fig. 2) of the negative electrode plate 2 that is opposite to the side end thereof at which the positive electrode lead 11 was formed, in one side of the negative electrode plate 2 that extends along the widthwise direction, to form a negative electrode lead 12.

### Formation of Protective Layer

1 g of polyimide powder serving as an insulative polymer substance and 0.1 g of acetylene black (carbon powder) having a specific surface of 40 m²/g serving as a conductive material were mixed and dispersed in 20 g of NMP serving as a solvent and containing 5 mass % of PVdF as a binder, to prepare a slurry (hereinafter also referred to as "semi-conductive slurry"). As illustrated in Fig. l(a), this semi-conductive slurry was applied onto both sides of the base end portion (base portion) of the positive electrode current collector lead 11 of the positive electrode plate 1, that is, onto both sides of the positive electrode current collector lead 11 outwardly along the boundary between the portion with the positive electrode active material layer 1a and the portion without the positive electrode active material layer 1a (referring to Fig. 1(a), an extension line of the upper edge of the positive electrode plate 1 on which the positive electrode current collector lead 11 is attached), in a width L3 of 30 mm, a height L11 of 5 mm, and a thickness per one side of 40 µm, to form a protective layer 13 (semi-conductive layer).

### Preparation of Pouch-shaped Separator in which the Positive Electrode Plate is Disposed

A positive electrode plate 1 was disposed between two square-shaped polypropylene (PP) separators 3a (thickness: 30 µm) each having a width L5 of 90 mm and a height L6 of 90 mm as illustrated in Fig. 1(b). Thereafter, as illustrated in Fig. 1(c), the four sides (perimeter portion: excluding the portion from which the positive electrode current collector lead 11 protrudes) of the separators 3a were thermally welded and joined to form joined portions 4 extending along the respective sides, to prepare a pouch-shaped separator 3, in which the positive electrode plate 1 was accommodated.

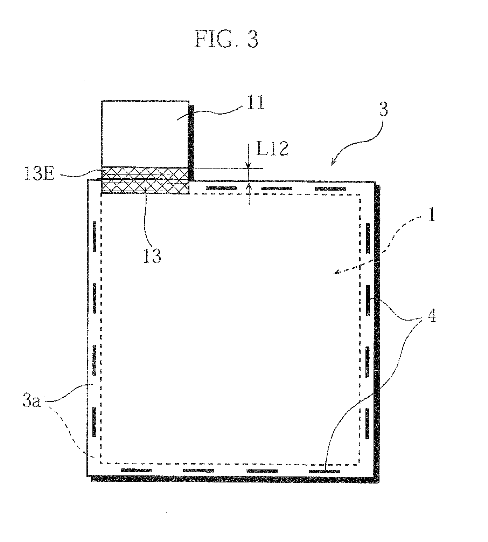

At this point, as illustrated in Fig. 3, the joined portions 4 of the separator 3a were formed intermittently (a plurality of joined portions are spaced apart and lined up), and the proportion of the joined region of the joined portions 4 was set at 50%.

In addition, both sides of the positive electrode current collector lead 11 are bonded to the separators 3a by the semi-conductive slurry that has been coated on both sides of the positive electrode current collector lead 11 but not yet dried. As illustrated in Fig. 3, the protective layer 13 was made to protrude outward (upward in Fig. 3) from the separators 3a by L12 =2.5 mm, so as to form a protruding portion 13E.

### Preparation of Stacked Electrode Assembly

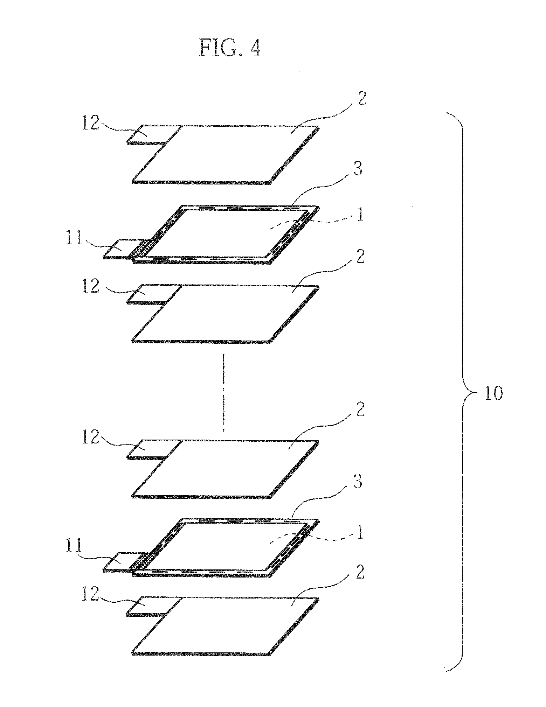

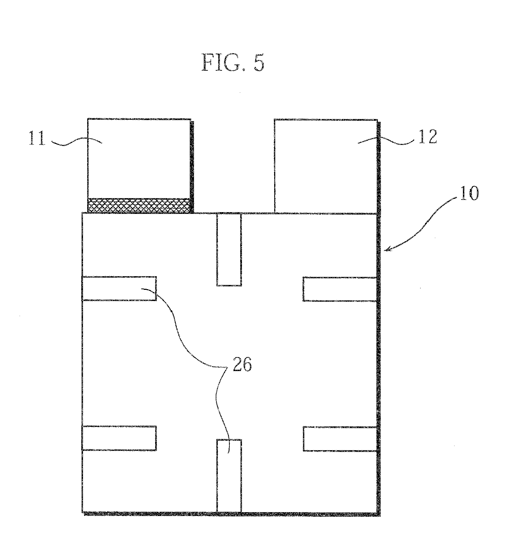

15 sheets of the pouch-shaped separators 3 in each of which the positive electrode plate 1 was disposed and 16 sheets of the negative electrode plates 2 were prepared, and the pouch-shaped separators 3 and the negative electrode plates 2 were alternately stacked one on the other, as illustrated in Fig. 4. Then, negative electrode plates 2 were located at both stacking direction-wise ends of the stack. Subsequently, as illustrated in Fig. 5, the top and bottom faces of the stacked component were connected by insulating tapes 26 for retaining its shape. Thus, a stacked electrode assembly 10 was obtained.

### Welding of Current Collectors

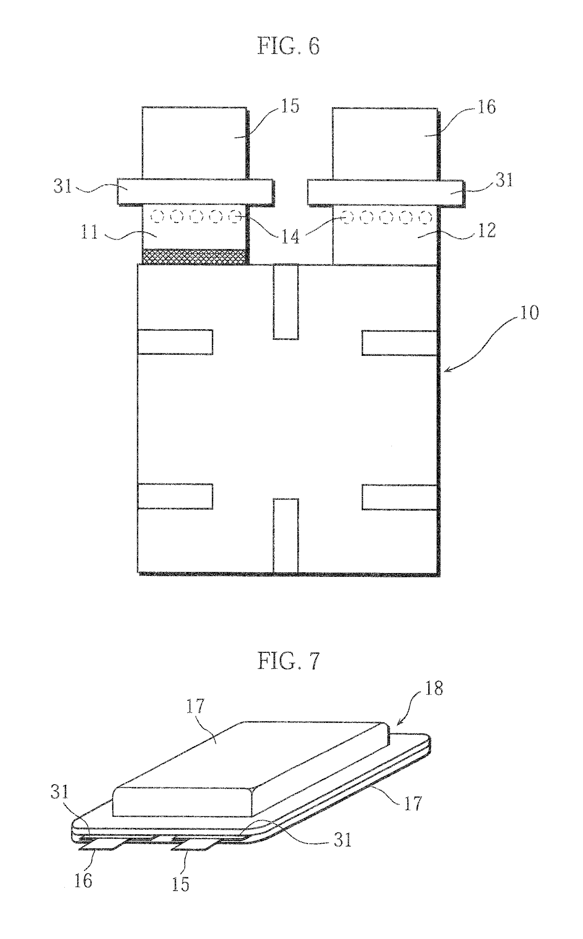

As illustrated in Fig. 6, a positive electrode current collector terminal 15 made of an aluminum plate having a width of 30 mm and a thickness of 0.4 mm and a negative electrode current collector terminal 16 made of a copper plate having a width of 30 mm and a thickness of 0.4 mm were welded respectively to the foremost ends of the positive electrode current collector leads 11 and the foremost ends of the negative electrode current collector leads 12 at weld points 14 by ultrasonic welding.

Note that reference numeral 31 shown in Fig. 6 and other drawings denotes a resin sealing material (adhesive material), formed so as to be firmly bonded to each of the positive and negative electrode current collector terminals 15 and 16 in a strip shape along the widthwise direction, for ensuring hermeticity when heat-sealing a later-described battery case 18.

### Placing the Electrode Assembly in Battery Case

As illustrated in Fig. 7, the above-described stacked electrode assembly 10 was inserted into a battery case 18 formed of laminate films 17, which had been formed in advance so that the stacked electrode assembly 10 could be enclosed therein. Then, one of the three sides excluding the one side of the battery case in which the positive electrode current collector terminal 15 and the negative electrode current collector terminal 16 were placed was left open, and the remaining three sides of the battery case were thermally welded together so that only the positive electrode current collector terminal 15 and the negative electrode current collector terminal 16 would protrude outward from the battery case 18.

### Filling Electrolyte Solution and Sealing the Battery Case

An electrolyte solution was prepared by dissolving LiPF₆ at a concentration of 1 M (mol/L) in a mixed solvent of 30 : 70 volume ratio of ethylene carbonate (EC) and methyl ethyl carbonate (MEC). The electrolyte solution was filled into the battery case 18 from the remaining one side of the battery case that was not yet thermally bonded. Lastly, the one side that had not been thermally bonded was thermally bonded. Thus, a battery was prepared.

### Modified Example

Next, an embodiment in which the protective layer is formed also on the positive electrode active material layer near the boundary between the positive electrode active material layer and the portion in which the aluminum foil current collector is exposed in the positive electrode plate will be described as a modified example of the present invention. Since the same manufacturing method can be used except for the method of forming the protective layer, the following description is made only about the method of forming the protective layer.

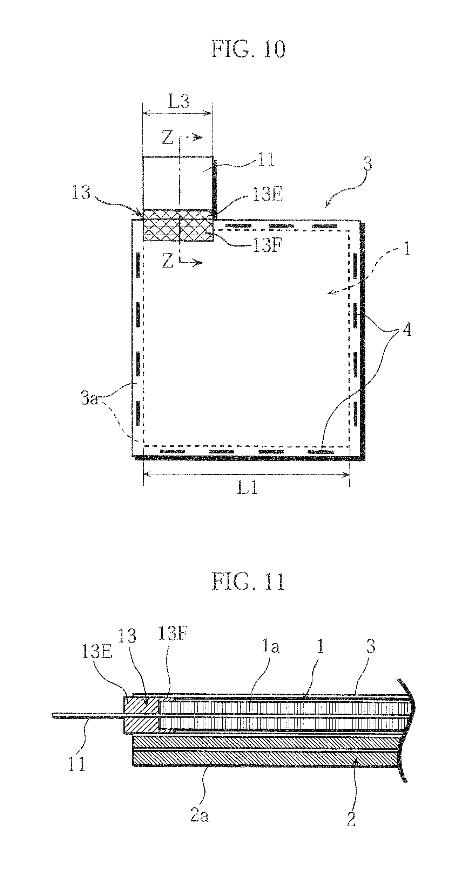

As illustrated in Fig. 10, the semi-conductive slurry prepared in the previously-described manner was applied onto both sides of the base end portion (base portion) of the positive electrode current collector lead 11 of the positive electrode plate 1, that is, onto both sides of the positive electrode current collector lead 11 at the boundary between the portion with the positive electrode active material layer 1a and the portion without the positive electrode active material layer 1a and onto the positive electrode active material layer 1a that is located near the boundary between the portion with the positive electrode active material layer 1a and the portion without the positive electrode active material layer la, to form a protective layer 13 (semi-conductive layer). Fig. 11 is a cross-sectional view taken along line Z-Z in Fig. 10, which also shows an adjacent negative electrode plate 2.

When the protective layer 13F (semi-conductive layer) is formed on the positive electrode active material layer 1a located near the boundary between the portion with the positive electrode active material layer 1a and the portion without the positive electrode active material layer 1a in this way, lithium deposition can be inhibited on the negative electrodes plate facing an end portion of the positive electrode active material layer 1a, that is, the positive electrode active material layer 1a located near the between the portion with the positive electrode active material layer 1a and the portion without the positive electrode active material layer 1a. As a result, a battery with a higher level of safety can be obtained.

The protective layer 13F (the semi-conductive layer: hereinafter also referred to as an "entry portion") to be formed on the positive electrode active material layer 1a may be formed, for example, in the following manner. The positive electrode mixture is intermittently coated on both sides of the metal plate (aluminum foil) before cutting out the positive electrode plate 1, and then the article is dried and compressed to form the positive electrode active material layer la. Thereafter, the metal plate is cut out in a shape having the positive electrode current collector lead 11. Subsequently, the semi-conductive slurry is applied onto both sides of the base end portion (base portion) of the positive electrode current collector lead 11 so that the protruding portion 13E through the entry portion 13F are formed continuously, in other words, the semi-conductive slurry is applied from the region protruding outward (upward) from the separators 3a to the region overlapping (entering) an end portion of the positive electrode active material layer 1a. Thereafter, both sides of the positive electrode current collector lead 11 are bonded to the separators 3a by the semi-conductive slurry that has been coated on the region, including the entry portion 13F but not yet dried.

By the just-described process, the protective layer 13 (semi-conductive layer) including the region extending from the protruding portion 13E to the entry portion 13F is formed so as to have a length equal to the width L3 of the positive electrode current collector lead 11, as illustrated in Fig. 10.

Although the protruding portion 13E is not an essential component, it is more preferable to provide the protruding portion 13E.

### Other Embodiments.

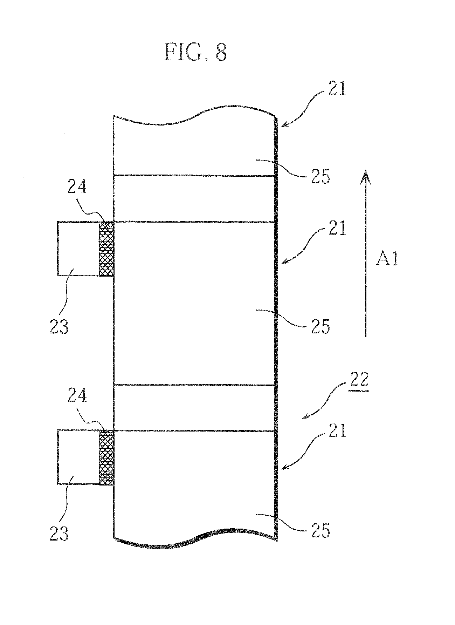

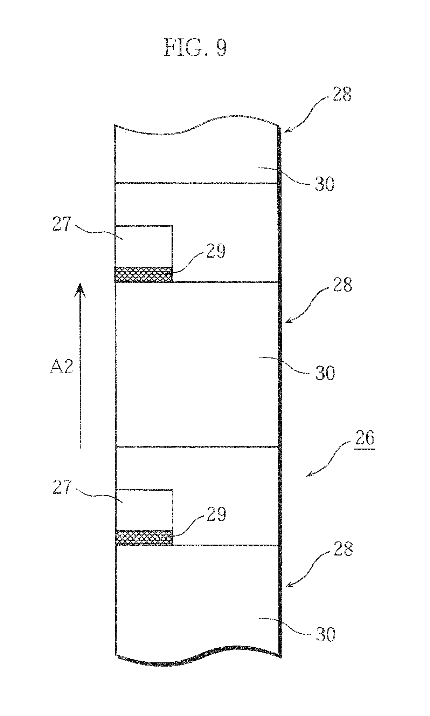

(1) In the foregoing embodiments, an angular stack type battery is fabricated that is configured to have an angular outer shape by inserting the stacked electrode assembly 10, in which the square-shaped positive and negative electrode plates 1, 2 and the separators 3a are stacked on one another, in the laminate battery case 18. However, it is possible to use a battery can, for example, as the battery case.
(2) In the foregoing embodiments, the semi-conductive slurry is coated on both sides of the positive electrode current collector lead 11 that is the portion in which the metal of the positive electrode current collector (i.e., aluminum foil) is exposed, and the separators 3a are bonded to the respective sides of the positive electrode current collector lead 11 by the semi-conductive slurry that has not yet been dried. However, in addition thereto, or in place of thereof, it is possible to coat the semi-conductive slurry onto the portion of the separator that faces the portion of the current collector in which the metal is exposed. It should be noted, however, that when the protective layer is to be formed extending to the region outside the region facing the separator in the region in which the metal is exposed, the semi-conductive slurry needs to be coated at least on the portion of the current collector in which the metal is exposed.
   In addition, the protective layer may be configured as follows. For example, a semi-conductive adhesive layer may be formed on both sides of a conductive substrate material to prepare a semi-conductive double-sided tape, and using this double-sided tape, the portion of the current collector in which the metal is exposed and the separator may be joined to each other. Nevertheless, from the viewpoints of the thickness of the resulting protective layer and the trouble in manufacture, it is more advantageous to coat the semi-conductive slurry onto the portion of the current collector in which the metal is exposed, as described in the foregoing embodiments.
(3) In the foregoing embodiments, the joined portions 4 of the pouch-shared separator 3 are formed by thermal welding. However, it is also possible to use other method than thermal welding, such as ultrasonic welding and bonding using an adhesive agent, to form the joined portions.
(4) The foregoing embodiments employ the structure in which the positive electrodes plate 1 is enclosed in the pouch-shaped separator 3. However, it is possible to employ the structure in which a negative electrode plate is enclosed in the pouch-shaped separator. In the case of this structure, the protective layer is formed between a portion of the negative electrode current collector in which the metal is exposed and the pouch-shaped separator. However, the negative electrode plate is usually prepared in a greater size than the positive electrode plate. For this reason, it is more desirable to employ the structure in which the positive electrode plate is enclosed in the pouch-shaped separator also from the viewpoint of space-saving.
(5) It is sufficient as long as the protective layer is non-insulative and shows semi-conductivity with a lower electron conductivity than that of the metal of the current collector. For example, it is particularly desirable that the protective layer have a resistance of from about 5 Ω to about 100 Ω, more preferably from about 30 Ω to about 40 Ω, from the viewpoint of ensuring battery safety effectively by causing gentle discharge.
(6) In order to prepare an electrode plate having a protective layer, it is possible, as illustrated in Fig. 8, that, with a metal plate 22 from which each of the electrode plates 21 is to be cut out, the current collector lead 23 of each of the electrode plates 21 may be formed so as to protrude outward in a widthwise direction of the metal, plate 22, and the semi-conductive slurry may be coated on the base end portion (base portion) of each of the current collector leads 23 along the travelling direction (longitudinal direction) of the metal plate 22 indicated by the arrow A1 in Fig. 8, to thereby form a protective layer 24. According to this method, the widthwise direction of the current collector lead 23 matches the travelling direction At of the metal plate 22. Therefore, it is possible to form the protective layer 24 extending along the widthwise direction of the current collector lead 23 easily. Moreover, while sending out the metal plate the protective layer 24 can be formed in the same step as the formation step of the active material layer 25. However, a drawback with this method is that it is difficult to ensure accuracy in coating the semi-conductive slurry.
   On the other hand, it is also possible to use the following method. For example, as illustrated in Fig. 9, the arrangement of electrode plates 28 is configured so that current collector leads 27 protrude along the travelling direction (i.e., the longitudinal direction) of a metal plate 26 as indicated by the arrow A2 in the figure, and the semi-conductive slurry is coated along the widthwise direction of each of the metal plates 26 at the base end portion (base portion) of each of the current collector leads 27, to form a protective layer 29. With this method, the current collector lead 27 of each of the electrode plates 28 need not be formed so as to protrude in the widthwise direction of the metal plate 26. Nevertheless, since the widthwise direction of the current collector lead 27 is perpendicular to the travelling direction A2 of the metal plate 26, it is difficult to form the protective layer 29 extending along the widthwise direction of the current collector lead 27. In view of the problem, it is conceivably to coat the semi-conductive scurry in the stacking step after cutting out the electrode plates 28. In this case, however, the protective layer 29 is not formed in the same process step as the formation of active material layer 30 while feeding the metal plate 26, but the formation step of the protective layer 29 is performed after cutting out the electrode plates 28 subsequent to the formation of the active material layer 30. As a consequence, the manufacturing process becomes longer, and accordingly the efficiency lowers. Here, according to the present invention, the drying step of the semi-conductive slurry is unnecessary because the portion in which the metal is exposed (the current collector lead 27 in the example shown here) and the separator are bonded to each other by the semi-conductive slurry before drying to carry out the positioning (fixing) of the separator.
(7) In the foregoing embodiments, the pouch-shaped separator 3 is formed by joining two separators 3a to each other at their four sides (i.e., the perimeter portion) thereof. However, in place thereof, it is possible to form a pouch-shaped separator by folding over one sheet of separator and joining the three sides (i.e., the perimeter portion) except for the folded portion to each other.
(8) In the above-described modified example, the protective layer 13 (semi-conductive layer) including the region extending from the protruding portion 13E to the entry portion 13F is formed so as to have a length equal to the width L3 of the positive electrode current collector lead 11. However, it is also possible that the entry portion 13F of the protective layer 13 (semi-conductive layer) may be extended so as to cover the width L1 the entire width) of the positive electrode plate 1. In this case, the formation step (procedure) of the protective layer 13 (semi-conductive layer) may be the same as in the cause of the above-described modified example. This structure aims at inhibiting lithium deposition on the negative electrode plate that faces the positive electrode active material layer 1a more effectively by entirely covering an end portion (the upper end portion in Fig. 10) of the positive electrode active material layer 1a with the entry portion 13F of the protective layer 13 (semi-conductive layer).
(9) The positive electrode active material is not limited to lithium cobalt oxide. Other usable materials include lithium composite oxides containing cobalt, nickel, or manganese, such as lithium cobalt-nickel-mangancse composite oxide, lithium alumirmm-nickel-manganese composite oxide, and lithium aluminum-nickel-cobalt composite oxide, as well as spinel-type lithium manganese oxides.
(10) Other than the graphite such as natural graphite and artificial graphite, various materials may be employed as the negative electrode active material as long as the material is capable of intercalating and deintercalating lithium ions. Examples include coke, tin oxides, metallic lithium, silicon, and mixtures thereof.
(11) The electrolyte is not limited to that shown in the example above, and various other substance may be used. Examples of the supporting salt include LiBF₄, LiPF₆, LiN(SO₂CF₃)₂, LiN(SO₂C₂F₅)₂, and LiPF_{6-X}(CₙF₂ₙ₊₁)_{X} (wherein 1 < x < 6 and n = 1 or 2), which may be used either alone or in combination. The concentration of the supporting salt is not particularly limited, but it is preferable that the concentration be restricted in the range of from 0.8 moles to 1.8 moles per 1 liter of the electrolyte solution. The types of the solvents are not particularly limited to EC and MEW mentioned above. Examples of preferable solvents include carbonate solvents such as propylene carbonate (PC), γ-butyrolactone (GBL), ethyl methyl carbonate (EMC), dimethyl carbonate (DMC), and diethyl carbonate (DEC). More preferable is a combination of a cyclic carbonate and a chain carbonate.

The present invention is suitably applied to, for example, power sources for high-power applications, such as backup power sources and power sources for the motive power incorporated in robots and electric automobiles.

While detailed embodiments have been used to illustrate the present invention, to those skilled in the art, however, it will be apparent from the foregoing disclosure that various changes and modifications can be made therein without departing from the spirit and scope of the invention. Furthermore, the foregoing description of the embodiments according to the present invention is provided for illustration only, and is not intended to limit the invention.

## Claims

1. A stack type battery comprising:
one or more first electrodes each having a current collector made of a metal sheet, an active material mixture layer formed on at least one side thereof, and a portion in which the metal is exposed, each of the one or more first electrodes with the portion in which the metal is exposed facing one or more second electrodes across a separator; and
a protective layer formed between the separator and the portion of the first electrode in which the metal is exposed, the protective layer made of a material having a lower electron conductivity than that of the metal and being non-insulative,
wherein the separator and the portion of the first electrode in which the metal is exposed are jointed by the protective layer.

2. The stack type battery according to claim 1, wherein the one or more first electrodes and the one or more second electrodes comprise a plurality of positive electrode plates having respective positive electrode current collector leads protruding therefrom and a plurality of negative electrode plates having respective negative electrode current collector leads protruding therefrom, and further comprising a stacked electrode assembly having the positive electrode plates and the negative electrode plates being alternately stacked on one another across the separator interposed therebetween.

3. The stack type battery according to claim 2, wherein the one or more first electrodes are the positive electrode plates, and the protective layer is formed additionally on the active material mixture layer near a boundary between the active material mixture layer of the positive electrode plate and the portion of the positive electrode plate in which the metal is exposed.

4. The stack, type battery according to claim 2 or 3, wherein the portion of the first electrode in which the metal is exposed is a current collector lead.

5. The stack type battery according to any one of claim 1 through 4, wherein the separator is formed in a pouch shape, and each of the one or more first electrodes is enclosed in the pouch-shaped separator.

6. The stack type battery according to claim 5, wherein a positive electrode plate is enclosed in the pouch-shaped separator.

7. The stack type battery according to claim 5 or 6, wherein the pouch-shaped separator comprises a separator folded and joined an a perimeter portion thereof intermittently, or separators overlapped and joined at a perimeter portion thereof intermittently.

8. The stack type battery according to any one of claims 1 through 7, wherein the number of the positive electrode plates in the stacked electrode assembly is 15 or greater.

9. The stack type battery according to any one of claims 1 through 8, wherein each of the one or more electrodes has a current collector lead having a width of 30 mm or greater.

10. The stack type battery according to any one of claims 1 through 9, wherein the protective layer protrudes from a position between the portion in which the metal is exposed and the separator to outside.

11. The stack type battery according to any one of claims 1 through 10, wherein the protective layer comprises an insulative polymer substance and a powder dispersed in the insulative polymer substance, the powder comprising at least one material selected from the group consisting of an electron conductive carbonaceous material, a semiconductor material, and a conductive oxide.

12. The stack type battery according to claim 11, wherein the insulative polymer substance is at least one substance selected from the group consisting of polyimide, polyamideimide, and polyvinylidene fluoride.

13. A method of manufacturing a stack type battery comprising one or more first electrodes each having a current collector made of a metal an active material mixture layer formed disposed on at one side thereof, and a portion in which the metal is exposed, the one or more first electrodes with the portion in which the metal is exposed facing one or more second electrodes across a separator, the method comprising the steps of:
forming a protective layer made of a material having a lower electron conductivity than the metal and being non-insulative on at least one of the separator and the portion of the first electrode in which the metal is exposed; and
joining the portion in which the metal is exposed the separator to each other by the protective layer.

14. The method according to claim 13, wherein:
the of forming a protective layer comprises preparing a slurry by dispersing a powder in an insulative polymer substance, the powder comprising at least one material selected from the group consisting of an electron conductive carbonaceous material, a semiconductor material, and a conductive oxide, and coating the slurry onto at least one of the portion in which the metal is exposed and the separator to form the protective layer; and
the step of joining the portion in which the metal is exposed and the separator to each other comprises bonding the portion in which the metal is exposed and the separator to each other before drying the slurry, and drying the scurry to thereby join the portion in which the metal is exposed and the separator to each other.

15. The method according to claim 13 or 14, wherein the step of forming a protective layer comprises forming the protective layer so as to protrude from a position between the portion in which the metal is exposed and the separator to outside.

16. The method according to any one of claim 3 through 15, wherein the one or more first electrodes comprise a positive electrode plate, and in the step of forming a protective layer, the protective layer is formed in a location between the active material mixture layer and the separator near a boundary between the active material mixture layer or the positive electrode plate and the portion of the positive electrode plate in which the metal is exposed.
